# EUROPÄISCHE PATENTSCHRIFT

(11) **EP 0 951 212 B1**
(45) Veröffentlichungstag und Bekanntmachung des Hinweises auf die Patenterteilung: **18.10.2000**
(21) Anmeldenummer: 97911104.4
(22) Anmeldetag: 20.11.1997
(51) Int. Cl.: A01G 9/02

(54) **GEFÄSS, INSBESONDERE PFLANZENGEFÄSS**
RECEPTACLE, PARTICULARLY PLANT RECEPTACLE
RECIPIENT, EN PARTICULIER RECIPIENT POUR PLANTES

(30) Priorität: 28.11.1996 CH 292596
(43) Veröffentlichungstag der Anmeldung: 27.10.1999
(73) Patentinhaber: Lips, Bernhard, 8143 Stallikon (CH); Lips, Doris, 6289 Hämikon (CH)
(72) Erfinder: LIPS, Doris, CH-6289 Hämikon (CH)
(74) Vertreter: Volpert, Marcus, Dr.
(86) Internationale Anmeldenummer: CH9700439
(87) Internationale Veröffentlichungsnummer: WO9823144

(56) Entgegenhaltungen:
- EP-A- 0 103 342
- DE-C- 474 576
- GB-A- 859 964
- GB-A- 1 373 343
- GB-A- 2 098 052
- US-A- 4 120 119

## Beschreibung

Die Erfindung betrifft ein Pflanzengefäss gemäss dem Oberbegriff des Patentanspruchs 1.

Pflanzengefässe werden häufig im Freien aufgestellt. Sie sind den Witterungseinflüssen und mechanischen Belastungen, wie z.B. Stössen durch Passanten oder Fahrzeuge, ausgesetzt. Sie sollten daher aus einem witterungsbeständigen, widerstandsfähigen Material hergestellt werden. Aus ökologischen Gründen sollte dieses Material ausserdem wiederverwertbar sein. Die Konsumenten achten heutzutage beim Kauf von Waren darauf, ob diese aus wiederverwertbaren Materialien bestehen. Die kostengünstige Wiederverwertbarkeit ist daher eine Voraussetzung für den erfolgreichen Verkauf eines Produktes.

Gemäss dem Stand der Technik bestehen Pflanzengefässe aus Terrakotta, Asbestzement, Waschbeton, Kunststoff, insbesondere Polystyrol, verzinktem Eisenblech oder Blei. Diese Materialien sind nicht witterungsbeständig. Wenn herkömmliche Pflanzengefässe längere Zeit im Freien stehen werden sie unansehnlich oder sogar beschädigt. Ausserdem sind die bekannterweise für Pflanzengefässe verwendeten Materialien nur mit grossem Aufwand wiederverwertbar. Alte Pflanzengefässe werden daher meistens in den Abfall geworfen und tragen damit zum ständigen Anwachsen der Abfallmenge bei.

Ein Gefäss der eingangs erwähnten Art ist aus der US-A-4 120 119 bekannt. Überschüssige Flüssigkeit staut sich in diesem Gefäss, da im Boden keinerlei Bohrungen vorgesehen sind. Die GB-A-859 964 zeigt ein Gefäss mit einem gewölbtem Boden und darin radial aussenliegenden Bohrungen. Überschüssige Flüssigkeit fliesst aus einem derartigen Gefäss sofort ab.

Die Erfindung stellt sich nun die Aufgabe, ein Gefäss der eingangs erwähnten Art aus einem Material zu schaffen, das hinsichtlich des Flüssigkeitsstandes leichter handhabbar ist.

Die Aufgabe wird mit Hilfe der erfindungsgemässen Merkmale des Patentanspruchs 1 gelöst. Vorteilhafte Weiterbildungen der Erfindung sind Gegenstand der Unteransprüche.

Das vorgeschlagene Pflanzengefäss besteht aus Aluminium. Es kann unterschiedliche Formen haben. Sein Querschnitt kann rund, oval oder polygonförmig sein. Das Pflanzengefäss weist einen teilweise flächigen Boden und mindestens eine Seitenwand auf. Es ist an der Oberseite offen. Die Form des Bodens richtet sich nach der Querschnittsform des Pflanzengefässes. Der Boden kann mit mindestens einer (vorzugsweise zwei) durchgehenden, im gewölbten Bereich des Bodens vorgesehenen Bohrung versehen sein, welche zur Abführung von überschüssigem Wasser aus dem Gefässinnenraum dient. Ausbildungsarten des Pflanzengefässes mit rundem oder ovalem Querschnitt besitzen eine umlaufende Seitenwand. Ausbildungsarten mit polygonförmigem Querschnitt weisen mehrere, im wesentlichen ebene Seitenwände auf. Die Gefässe sind gegen oben erweitert. Die Seitenwände weisen daher in bezug auf die Vertikale eine Neigung von mindestens 1° auf. Sie können ausserdem mit Verstärkungsrippen versehen sein. Diese Verstärkungsrippen befinden sich vorzugsweise im oberen und/oder im unteren Randbereich der Seitenwände. Die Aussenflächen der Seitenwände werden vorzugsweise im Rohzustand belassen. Es besteht jedoch auch die Möglichkeit, diese Aussenflächen zu beschichten, zu trowalisieren, zu polieren oder in einer anderen Art und Weise zu veredeln. Die Dicke der Seitenwände und des Bodens liegt je nach Grösse des Pflanzengefässes zwischen 2 mm und 30 mm. Bei grossen Ausbildungsarten des vorgeschlagenen Pflanzengefässes sind an der Unterseite des Bodens mit Vorteil Rollen angebracht. Dies erleichtert den Transport des Pflanzengefässes.
Zur Herstellung des Pflanzengefässes können beliebige, geeignete Verfahren dienen. Geeignete Verfahren sind beispielsweise der Sandguss, der Schwerkraftkokillenguss, der Niederdruckkokillenguss, der Druckguss, das Stanzverfahren oder das Tiefziehverfahren.
Falls das Pflanzengefäss gegossen wird, dann weisen seine Seitenwände an den Innenflächen vorzugsweise quer zum Boden verlaufende Rippen mit einer Höhe von bis zu 2 mm auf. Diese Rippen dienen während der Herstellung des Pflanzengefässes zur Ableitung der Luft aus der Gussform. Die Form des Pflanzengefässes ist derartig ausgebildet, dass das Pflanzengefäss bei der Herstellung problemlos entformt werden kann.

Die Erfindung wird im folgenden anhand von Ausführungsbeispielen näher erläutert. Sie ist unter anderem auch in den Zeichnungen beschrieben. Es zeigen:
- Fig. 1a: eine perspektivische Darstellung eines vorgeschlagenen Pflanzengefässes mit rundem Querschnitt und nach aussen gewölbter Seitenwand, welches auf einem runden Unterlagsteller steht;
- Fig. 1b: eine perspektivische Darstellung eines vorgeschlagenen Pflanzengefässes mit rundem Querschnitt und nach innen gewölbter Seitenwand, welches auf einem runden Unterlagsteller steht;
- Fig. 1c: eine perspektivische Darstellung eines vorgeschlagenen Pflanzengefässes mit recheckigem Querschnitt, welches auf einem rechteckigen Unterlagsteller steht;
- Fig. 2a: eine Seitenansicht eines Pflanzengefässes gemäss Fig. 1a;
- Fig. 2b: eine Aufsicht auf ein Pflanzengefäss gemäss Fig. 2a;
- Fig. 3a: eine Seitenansicht eines Unterlagstellers gemäss Fig. 1a;
- Fig. 3b: eine Aufsicht auf einen Unterlagsteller gemäss Fig. 3a;
- Fig. 4a: einen Schnitt A-A durch ein Pflanzengefäss gemäss Fig. 2b und
- Fig. 4b: einen Schnitt B-B durch einen Unterlagsteller gemäss Fig. 3b.

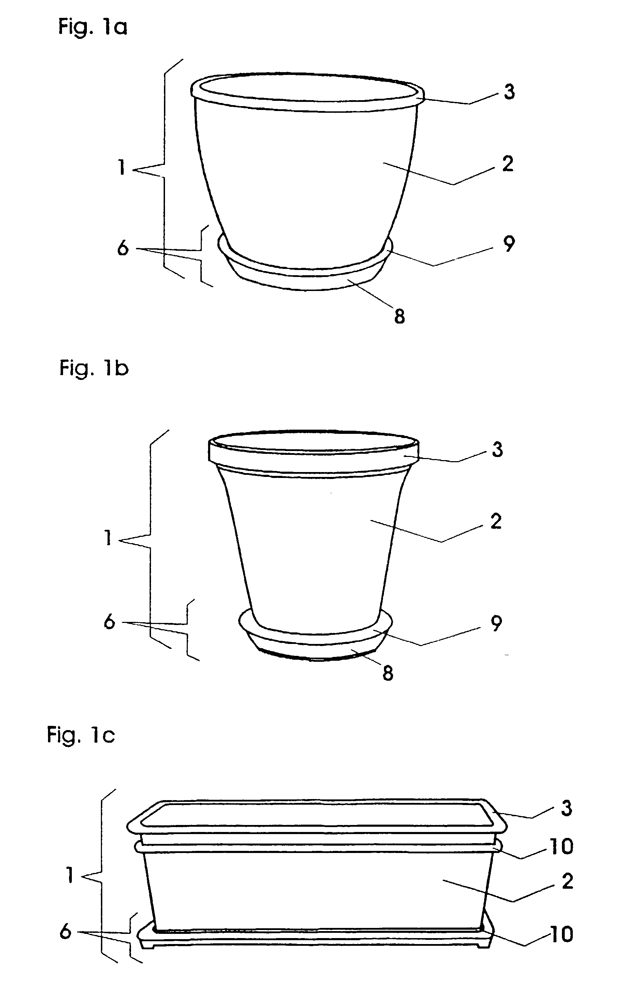

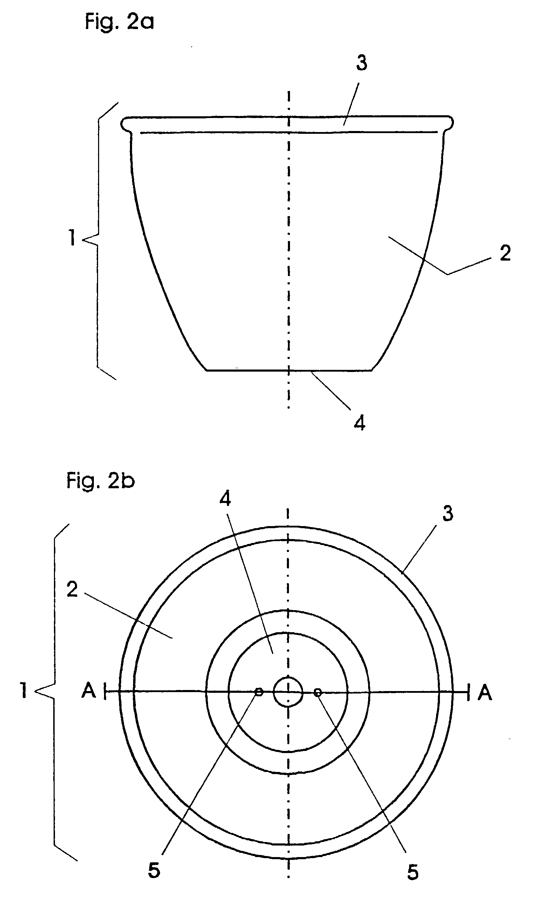

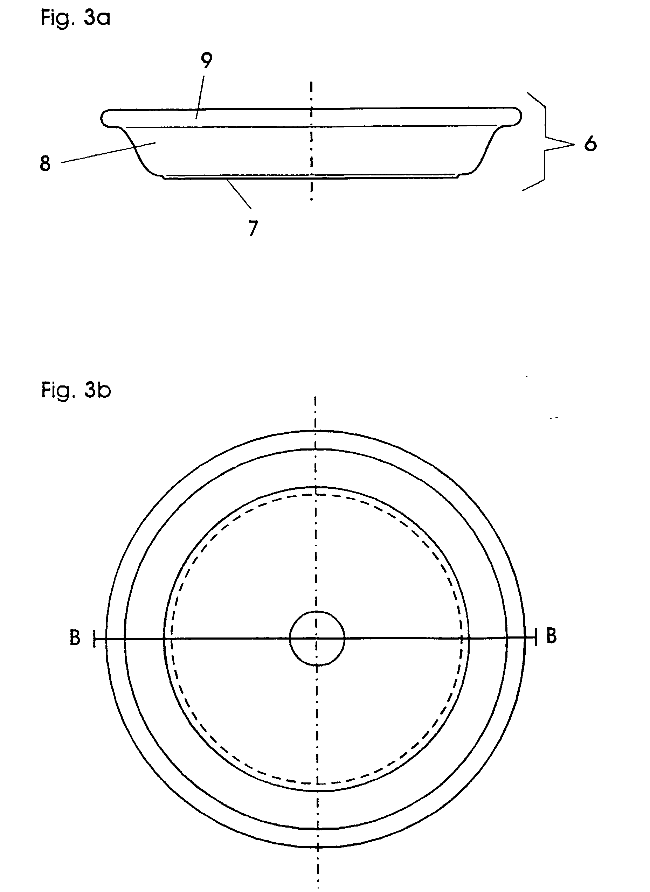

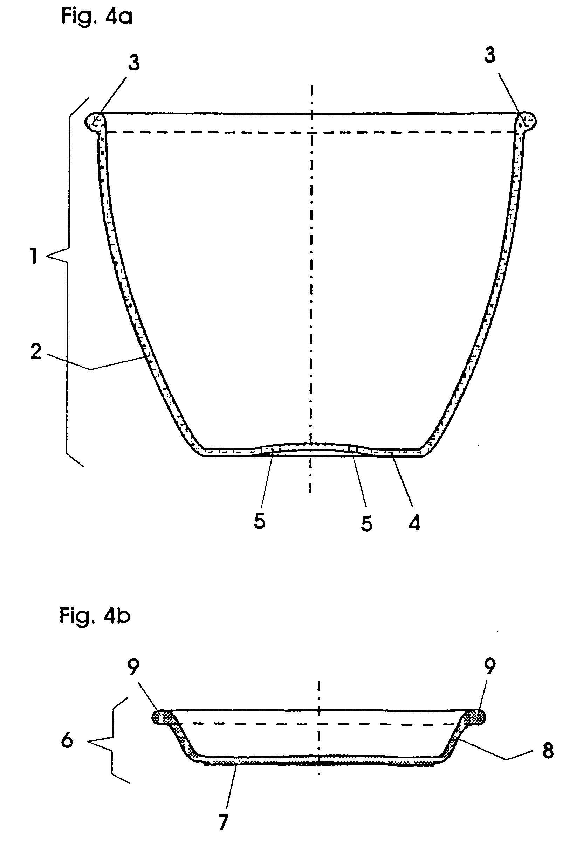

Die in Fig. 1a, 2a, 2b und 4a dargestellte erste Ausbildungsart des vorgeschlagenen Gefäss in Form eines Pflanzengefässes 1 weist einen runden Querschnitt auf. Seine umlaufende Seitenwand 2 ist nach aussen gewölbt. Der obere Rand 3 der Seitenwand 2 ist wulstartig verdickt. Dies erhöht die Stabilität des Pflanzengefässes 1. Der Boden 4 des Pflanzengefässes 1 weist gemäss Fig. 4a einen äusseren, an die Seitenwand 2 angrenzenden, ebenen Bereich und einen inneren, zentralen, nach oben gewölbten Bereich auf. Dadurch erhält das Pflanzengefäss 1 einen besseren Stand und wackelt weniger. Im weiteren weist der Boden 4 in seinem zentralen, gewölbten Bereich zwei durchgehende Bohrungen 5 auf, welche symmetrisch zum Bodenmittelpunkt angeordnet sind. Diese Bohrungen 5 leiten überschüssiges Wasser aus dem Gefässinnenraum ab. Durch die Lage der Bohrungen 5 in dem zentralen, nach oben gewölbten Bereich des Bodens 4 ist die Höhe des Flüssigkeitsstandes im Gefäss 1 einstellbar.
Das Pflanzengefäss 1 der ersten Ausbildungsart kann auf einen Unterlagsteller 6 aufgesetzt werden (vgl. Fig. 1a). Dieser Unterlagsteller 6 weist einen Boden 7 und eine niedrige, umlaufende Seitenwand 8 auf (vgl. Fig. 3a und 4b). Der obere Rand 9 der Seitenwand 8 kann zur Erhöhung der Stabilität und zum leichteren Ergreifen und Anheben des Gefässes 1 zu einem Wulst verdickt sein. Damit der Unterlagsteller 6 besser auf einer Fläche aufliegt, kann sein Boden 7 in einem zentralen Bereich nach oben gewölbt sein. Der Innendurchmesser des Unterlagstellers 6 entspricht dem Aussendurchmesser des untersten Abschnittes des Pflanzengefässes 1 oder übersteigt diesen.

Die in Fig. 1b dargestellte zweite Ausbildungsart des vorgeschlagenen Pflanzengefässes 1 weist ebenfalls einen runden Querschnitt auf. Seine umlaufende Seitenwand 2 ist hingegen leicht nach innen gewölbt. Die Wölbung ist in einem oberen Abschnitt der Seitenwand 2 stärker ausgeprägt als in den übrigen Abschnitten. Der oberste Endabschnitt der Seitenwand 2 ist aus Stabilitätsgründen verdickt. Die zweite Ausbildungsart des vorgeschlagenen Pflanzengefässes 1 kann ebenfalls auf einen runden Unterlagsteller 6 aufgesetzt werden.

In Fig. 1c ist schliesslich eine dritte Ausbildungsart des vorgeschlagenen Pflanzengefässes 1 dargestellt. Das Pflanzengefäss 1 dieser Ausbildungsart ist rechteckförmig. Es verfügt über vier Seitenwände 2. Der obere Rand 3 der Seitenwände 2 ist verdickt. Dadurch wird ein umlaufender, nach aussen abstehender Wulst gebildet. Etwas unterhalb des oberen Gefässrandes steht an der Aussenseite der Seitenwände 2 eine umlaufende Verstärkungsrippe 10 ab. Eine weitere, umlaufende Verstärkungsrippe 10 befindet sich am unteren Rand der Seitenwände 2. Die dritte Ausbildungsart des vorgeschlagenen Pflanzengefässes 1 kann auf einen rechteckigen Unterlagsteller 6 aufgesetzt werden.

Das vorgeschlagene Pflanzengefäss 1 aus Aluminium ist witterungsbeständig, schlagfest, säurebeständig, farbecht sowie beständig gegen ultraviolettes Licht. Es kann daher für eine lange Zeitdauer im Freien aufgestellt werden, ohne dass es dabei beschädigt wird. Aluminium bleibt während Jahren farbecht. Das vorgeschlagene Pflanzengefäss 1 kann daher problemlos auf Terrassen, Balkonen, Dachgärten, Fensterbänken oder auf Friedhöfen eingesetzt werden. Große Ausbildungsarten des Pflanzengefässes 1 eignen sich beispielsweise für die Begrünung von Gartenrestaurants und Vorplätzen von Hotels oder anderen Gebäuden.
Aluminium kann ohne grossen Materialverlust und ohne grossen Energieaufwand wiederverwertet werden. Für die Herstellung des vorgeschlagenen Pflanzengefässes 1 werden die natürlichen Ressourcen daher nicht zusätzlich beansprucht. Wenn das vorgeschlagene Pflanzengefäss 1 ausgedient hat, kann es einfach eingeschmolzen werden. Das eingeschmolzene Aluminium kann anschliessend zur Herstellung anderer Gegenstände dienen. Das vorgeschlagene Pflanzengefäss 1 überzeugt folglich auch in ökologischer Hinsicht.
Aluminium ist ein homogener Werkstoff. Aus Aluminium hergestellte Gegenstände weisen daher ebenmässige Oberflächen ohne Einfall- und Rissstellen oder andere Fehler auf. Das vorgeschlagene Pflanzengefäss 1 ist daher auch ästhetisch ansprechend.

Aluminium weist gegenüber allen Materialien, welche bisher für die Herstellung von Pflanzengefässen 1 verwendet werden, wesentliche Vorteile auf.
Im Gegensatz zu Terrakotta ist Aluminium nicht zerbrechlich und winterfest. Wenn das vorgeschlagene Pflanzengefäss 1 beispielsweise durch einen Windstoss umgekippt wird,
zerbricht es nicht. Es kann ausserdem auch während der kalten Jahreszeit im Freien gelassen werden.
Aluminium ist wesentlich leichter als Waschbeton. Der Transport des vorgeschlagenen Pflanzengefässes 1 ist entsprechend einfach.
Gegenüber Eisenblech hat Aluminium den grossen Vorteil, dass es nicht rostet. Das vorgeschlagene Pflanzengefäss 1 ist folglich beständiger als herkömmliche Pflanzengefässe aus Eisenblech.
Gegenüber Kunststoff hat Aluminium schliesslich den Vorteil, dass es ohne grossen Energieaufwand wiederverwertet werden kann.

Das vorgeschlagene Gefäss ist vielfältig einsetzbar. So eignet es sich sowohl für Erd- als auch für Hydrokulturen.

Dank dieser Vorteile wird das vorgeschlagene Gefäss auf dem Markt auf reges Interesse stossen.

## Patentansprüche

1. Pflanzengefäss mit einem Boden (4), wenigstens einer mit dem Boden (4) verbundenen Seitenwand (2) und einer offenen Oberseite, wobei der Boden (4) und die wenigstens eine Seitenwand (2) aus Aluminium gefertigt sind, **dadurch gekennzeichnet,** dass der Boden (4) einen äusseren, an die wenigstens eine Seitenwand (2) angrenzenden, ebenen Bereich, einen inneren, zentralen, nach oben gewölbten Bereich und wenigstens eine durchgehende Bohrung (5) aufweist, welche in dem inneren, zentralen, nach oben gewölbten Bereich derart angeordnet ist, dass durch die Lage der wenigstens einen Bohrung (5) in dem inneren, zentralen, nach oben gewölbten Bereich des Bodens (4) die Höhe des Flüssigkeitsstandes im Pflanzengefäss einstellbar ist.

2. Gefäss nach Anspruch 1, **dadurch gekennzeichnet,** dass der von der wenigstens einen Seitenwand (2) umschlossene Querschnitt des Gefässes zur Oberseite hin erweitert ist, wobei die Neigung zur Vertikalen vorzugsweise 1° beträgt.

3. Gefäss nach Anspruch 1 oder 2, **dadurch gekennzeichnet**, dass die Dicke des Bodens (4) und der wenigstens einen Seitenwand (2) zwischen 2 und 30 mm beträgt.

4. Gefäss nach einem der Ansprüche 1 bis 3, **dadurch gekennzeichnet,** dass die wenigstens eine Seitenwand (2) nach aussen oder leicht nach innen gewölbt ist, wobei vorzugsweise die Innenwölbung in einem oberen Bereich der Seitenwand (2) stärker als in den übrigen Abschnitten ausgebildet ist.

5. Gefäss nach einem der vorhergehenden Ansprüche, **dadurch gekennzeichnet,** dass der obere Rand (3) der wenigstens einen Seitenwand (2) zu einem Wulst verdickt ist.

6. Gefäss nach einem der vorhergehenden Ansprüche, **dadurch gekennzeichnet,** dass unterhalb des oberen Randes (3) an der Aussenseite der wenigstens einen Seitenwand (2) zumindest eine unlaufende Verstärkungsrippe (10) vorgesehen ist.

## Claims

1. Flowerpot with base (4) with at least one side wall (2) connected to the base (4) and an open top, whereby the base (4) and at least one side wall (2) are made of aluminum. It is characterized by the fact that the base (4) has an external, level area, which borders at least one side wall (2), an internal, central area, which is arched upward, and at least one completely penetrating drill hole (5), which is arranged in the internal, arched-upward central area in such as way that the height of the liquid level in the flower pot can be adjusted via at least one drill hole (5) in the internal, central area arched upward of the base (4).

2. Pot according to claim 1 characterized by the fact that at least one side wall (2) of the circling transverse section of the pot is extended to the upper side, whereby the angle to the vertical is preferably 1°.

3. Pot according to claim 1 or 2 characterized by the fact that the thickness of the base (4) and that of at least one side wall (2) is between 2 and 30 mm.

4. Pot according to claims 1 to 3 characterized by the fact that at least one side wall (2) is curved outward or slightly inward, whereby the internal curvature in the upper area of the side wall (2) is preferably greater than in the other areas.

5. Pot according to above claims characterized by the fact that the upper edge (3) is thickened of at least one side wall (2) to form a bulb.

6. Pot according to one of the previous claims characterized by the fact that a circling reinforcement rib (10) is provided below the upper edge (3) of the external side of at least one side wall (2).

## Revendications

1. Récipient à plantes ayant un fond (4), au moins une paroi latérale (2) raccordée au fond (4), et une face supérieure ouverte, le fond (4) et au moins la paroi latérale (2) étant fabriqués en aluminium, caractérisé en ce que le fond (4) présente un domaine plat, externe, adjacent à au moins une paroi latérale (2), un domaine interne, central, courbé vers le haut et au moins un alésage traversant (5), qui est disposé dans le domaine interne, central, courbé vers le haut de telle sorte que l'on puisse ajuster, grâce à la position au moins de l'alésage (5) dans le domaine interne, central, courbé vers le haut du fond (4), la hauteur du niveau de liquide dans le récipient à plantes.

2. Récipient selon la revendication 1, caractérisé en ce que la section transversale du récipient, entourée par au moins une paroi latérale (2), va en s'élargissant vers la face supérieure, l'inclinaison par rapport à la verticale étant de préférence de 1°.

3. Récipient selon la revendication 1 ou 2, caractérisé en ce que l'épaisseur du fond (4) et d'au moins une paroi latérale (2) est comprise entre 2 et 30 mm.

4. Récipient selon l'une quelconque des revendications 1 à 3, caractérisé en ce qu'au moins la paroi latérale (2) est courbée vers l'extérieur ou légèrement vers l'intérieur, la courbure vers l'intérieur étant formée dans un domaine supérieur de la paroi latérale (2) plus épais que les autres tronçons.

5. Récipient selon l'une quelconque des revendications précédentes, caractérisé en ce que le rebord supérieur (3) d'au moins une paroi latérale (2) est épaissi sous la forme d'un renflement.

6. Récipient selon l'une quelconque des revendications précédentes, caractérisé en ce que l'on prévoit, en dessous du rebord supérieur (3), sur la face externe d'au moins une paroi latérale (2), tout au moins une nervure de renforcement périphérique (10).
